# EUROPÄISCHE PATENTANMELDUNG

(11) **EP 3 534 513 A1**
(43) Veröffentlichungstag der Anmeldung: **04.09.2019**
(21) Anmeldenummer: 19160489.1
(22) Anmeldetag: 04.03.2019
(51) Int. Cl.: H02K 15/00, H02K 15/085, H02K 3/12

(54) **VERFAHREN UND VORRICHTUNG ZUM HERSTELLEN EINER ANORDNUNG FÜR EINE SPULE MIT EINER VERTEILTEN SPULENWICKLUNG EINER ELEKTRODYNAMISCHEN MASCHINE, ANORDNUNG UND SPULE**

(30) Priorität: 02.03.2018 DE 102018104844
(71) Anmelder: Aumann Espelkamp GmbH, 32339 Espelkamp (DE)
(72) Erfinder: WEISSE, Lando, 10717 Berlin (DE); SELL-LE BLANC, Florian, 76185 Karlsruhe (DE)
(74) Vertreter: Bittner, Thomas L.

(57) **Zusammenfassung**

Die Erfindung betrifft ein Verfahren zum Herstellen einer Anordnung für eine Spule mit einer verteilten Spulenwicklung einer elektrodynamischen Maschine, mit Bereitstellen eines Spulenkerns (1) mit Nuten (2) und Herstellen einer verteilten Spulenwicklung unter Verwendung eines Wickeldrahts mit Drahtisolierung, wobei hierbei in den Nuten (2) Lagen der verteilten Spulenwicklung aus dem Wickeldraht gebildet werden und der Wickeldraht in den Lagen in den Nuten (2) mit Hilfe eines Presswerkzeugs (7) gepresst wird. Weiterhin sind eine Anordnung für eine Spule mit einer verteilten Spulenwicklung einer elektrodynamischen Maschine, eine Spule für eine elektrodynamische Maschine sowie eine Vorrichtung zum Herstellen einer Anordnung für eine Spule mit einer verteilten Spulenwicklung einer elektrodynamischen Maschine vorgesehen.

## Beschreibung

Die Erfindung betrifft ein Verfahren und eine Vorrichtung zum Herstellen einer Anordnung für eine Spule mit einer verteilten Spulenwicklung einer elektrodynamischen Maschine sowie eine Anordnung und eine Spule.

### Hintergrund

Elektrodynamische Maschinen nutzen eine elektromagnetische Anregung über die Wicklung einer Spule, sei es in einem Rotor oder einem Stator. Die Spulenwicklung kann als eine verteilte Wicklung ausgebildet sein. In Ausführungsformen ist hierbei vorgesehen, dass die Wicklung über mehrere Zähne oder Nuten eines Spulenkerns ausgebildet ist. Im Unterschied hierzu erfasst eine konzentrierte Wicklung nur einen Spulenkörper oder Zahn des Kerns.

Eine wichtige Kenngröße von Spulen für elektrodynamische Maschinen ist der (mechanische) Füllfaktor. In Verbindung mit einer Nut des Spulenkerns bezieht er sich auf das Verhältnis der eingebrachten Menge an elektrischen Leitern, gemessen an deren Querschnittsflächen, zum vorhandenen Wickelraum in der Nut. In Verbindung mit den elektrischen Leitern werden hierbei der Leiter an sich sowie die den Leiter umgebende Isolierung berücksichtigt. Bei der Herstellung von Spulen für elektrodynamische Maschinen wird regelmäßig angestrebt, möglichst hohe Füllfaktoren zu erreichen.

### Zusammenfassung

Aufgabe der Erfindung ist es, in Verbindung mit einer Anordnung für eine Spule mit einer verteilten Spulenwicklung für eine elektrodynamische Maschine verbesserte Technologien anzugeben, mit denen der Füllfaktor optimiert werden kann.

Zur Lösung sind ein Verfahren und eine Vorrichtung zum Herstellen einer Anordnung für eine Spule mit einer verteilten Spulenwicklung einer elektrodynamischen Maschine nach den unabhängigen Ansprüchen 1 und 16 geschaffen. Weiterhin sind eine Anordnung für eine Spule mit einer verteilten Spulenwicklung einer elektrodynamischen Maschine nach Anspruch 14 sowie eine Spule für eine elektrodynamische Maschine nach Anspruch 15 geschaffen. Ausführungsformen sind Gegenstand von abhängigen Unteransprüchen.

Nach einem Aspekt ist ein Verfahren zum Herstellen einer Anordnung für eine Spule mit einer verteilten Spulenwicklung einer elektrodynamischen Maschine geschaffen. Bei dem Verfahren wird ein Spulenkern mit Nuten bereitgestellt. Es wird eine verteilte Spulenwicklung unter Verwendung eines Wickeldrahts mit Isolierung hergestellt, wobei hierbei in den Nuten Lagen der verteilten Spulenwicklung aus dem Wickeldraht gebildet werden und der Wickeldraht in den Lagen in den Nuten mithilfe eines Presswerkzeugs gepresst wird.

Nach einem weiteren Aspekt ist eine Anordnung für eine Spule mit einer verteilten Spulenwicklung einer elektrodynamischen Maschine geschaffen, die einen Spulenkern mit Nuten und einer verteilten Spulenwicklung aus einem Wickeldraht mit Isolierung aufweist, wobei die verteilte Spulenwicklung in den Nuten gepresste Lagen des Wickeldrahts aufweist.

Weiterhin ist eine Spule für eine elektrodynamische Maschine mit einer solchen Anordnung geschaffen.

Nach einem weiteren Aspekt ist ein Verfahren zum Herstellen einer Anordnung für eine Spule mit einer verteilten Spulenwicklung einer elektrodynamischen Maschine geschaffen. Die Vorrichtung weist eine Werkstückaufnahme, die eingerichtet ist, einen Spulenkern mit Nuten aufzunehmen, und eine Wickeleinrichtung auf, die eingerichtet ist, in den Nutenlagen einer verteilten Spulenwicklung aus dem Wickeldraht herzustellen. Weiterhin ist eine Presseinrichtung vorgesehen, die eingerichtet ist, den Wickeldraht in den Lagen in den Nuten mithilfe eines Presswerkzeugs zu pressen.

Mithilfe des Pressens der Lagen des Wickeldrahts in den Nuten des Spulenkerns, was auch als Kompaktieren bezeichnet werden kann, wird der lokale Füllfaktor im Vergleich zu einer Anordnung nicht gepresster Lagen des Wickeldrahts erhöht. Es entstehen gepresste Drahtbündel in den Nuten.

Hierbei kann vorgesehen sein, dass der Wickeldraht in den Lagen in den Nuten mithilfe des Presswerkzeugs gepresst wird, derart, dass sich der Drahtquerschnitt des Wickeldrahts plastisch verformt. In einer alternativen Ausführung erfolgt das Pressen derart, dass der Drahtquerschnitt des Wickeldrahts durch das Pressen oder Kompaktieren nicht verformt wird.

Die Anordnung kann zum Ausbilden eines Stators oder eines Rotors hergestellt werden.

Das Presswerkzeug kann zum Pressen des Wickeldrahts in den zuvor hergestellten Lagen in den Nuten in radialer Richtung in Bezug auf den Spulenkern wirken, also in radialer Richtung wirkend ausgebildet sein. Das Presswerkzeug kann zum Beispiel mittels eines elektrischen oder hydraulischen Aktors betrieben werden, um die Presskraft bereitzustellen.

Als Wickeldraht können Wickeldrähte aus einem Einzelleiter oder aus Drahtlitze verwendet werden, in denen mehrere Einzeldrähte miteinander verdrillt sind.

Der Spulenkern kann ein- oder mehrstückig ausgebildet sein. Die Nuten können zum Beispiel entlang einer umlaufenden Kreisbahn angeordnet sein.

Der Wickeldraht kann in den Nuten mittels eines Presskopfes des Presswerkzeugs verpresst werden, welcher zuvor in die Nuten jeweils eingebracht und mit Hilfe eines sich durch einen Nutschlitz der Nut erstreckenden Pressstempels mit Presskraft beaufschlagt wird. Das Presswerkzeug und / oder dessen Elemente können jeweils ein- oder mehrstückig ausgebildet sein. In einer Ausführungsform kann vorgesehen sein, dass Presskopf und Pressstempel lösbar miteinander verbunden sind, wodurch ein Presswerkzeug mit wechselbarem Presskopf bereitgestellt sein kann. In einer alternativen Ausführungsform erstreckt sich der Presskopf selbst durch den Nutschlitz und koppelt außerhalb des Nutschlitzes an den Presstempel, welcher seinerseits mit einem zugeordneten Aktor verbunden ist. Bei dieser oder anderen Ausführungsformen kann sich der Nutschlitz in radialer Richtung erstrecken. Die Beaufschlagung mit der zum Pressen angewendeten Presskraft erfolgt dann in einer Ausführung ausschließlich quer zur Längserstreckung der Nut in radialer Richtung. Alternativ kann vorgesehen sein, dass die Presskraft Kraftkomponenten in radialer und axialer Richtung aufweist. Gemeinsam ist den Ausführungen, dass wenigstens in radialer Richtung eine Presskraftkomponente ausgebildet ist.

Beim Pressen des Wickeldrahts in den Lagen in den Nuten kann das Presswerkzeug in einem Arbeitsgang den Wickeldraht über die gesamt Längserstreckung der Nut erfassen. Alternativ kann vorgesehen sein, das Presswerkzeug im Rahmen mehrerer Arbeitsgänge Stück für Stück entlang der Längserstreckung der Nut anzuwenden, um schließlich den Wickeldraht in den Lagen über die gesamte Länge der Nut oder nur eine Teil hiervon zu pressen, wobei in den einzelnen Arbeitsgängen jeweils nur ein Teilbereich der Längserstreckung der Nut erfasst wird. Das Presswerkzeug wird hierbei in axialer Richtung zwischen den Arbeitsgängen verlagert, wobei vorgesehen sein kann, dass bei dieser Verlagerung zumindest der Presskopf in der Nut verbleibt.

Das Presswerkzeug kann ausgebildet sein, in Längsrichtung der Nut und / oder in Querrichtung hierzu in Teilbereichen unterschiedliche Presskräfte auf den Wickeldraht in den Lagen anzuwenden, beispielsweise am Beginn des Pressvorgangs. Zu diesem Zweck kann das Presswerkzeug auf einer den Lagen zugewandten Seite zum Beispiel eine gekrümmte und / oder schräge Oberfläche aufweisen. Eine solche Oberflächenkontur auf der dem zu pressenden Wickeldraht in den Lagen zugewandten Seite des Presswerkzeugs kann sich an die innere Kontur der Nut anlehnen, also beispielsweise eine Negativform hierzu aufweisen.

Der Presskopf kann mittels einer Einführbewegung in axialer Richtung in der Nut eingebracht werden. Bei dieser Ausführungsform kann der Presskopf von einer oberseitigen oder einer unterseitigen Stirnseite der Nut in diese eingeführt werden. Alternativ kann vorgesehen sein, die Einführbewegung zumindest teilweise in radialer Richtung auszuführen, um das Presswerkzeug durch den Nutschlitz der Nut hierin einzubringen.

Als Pressstempel kann ein Pressstempel verwendet werden, welcher mit Blick in radialer Richtung eine Kopfbreite ausweist, die größer als eine Schlitzbreite des Nutschlitzes ist.

Der Wickeldraht kann in den Lagen im Wesentlichen über die gesamte Nutbreite der Nut flächig gepresst werden. Hierbei ist eine von Reibung möglichst wenig beeinflusste Bewegung des Presswerkzeugs, insbesondere des Presskopfes, in der Nut in radialer Richtung gewährleistet. Die Kopfbreite des Presskopfes kann mit Blick in radialer Richtung im Wesentlichen die Gesamtbreite der Nut erfassend ausgebildet sein. Die Nut und / oder der Presskopf können in radialer Richtung eine konische Ausbildung aufweisen.

Die Lagen in der Nut können die Nutbreite im Wesentlichen vollständig erfassend ausgebildet werden. In Richtung quer zur radialen Richtung erfassen nebeneinanderliegende Wickeldrähte in den Lagen die Nut im Wesentlichen über ihre gesamte Nutbreite.

Der Wickeldraht kann in den Lagen frei von einem axialen Fließen des Wickeldrahts gepresst werden. Eine hierfür geeignete Presskraft kann zum Beispiel experimental in Vor- oder Probeversuchen bestimmt werden, sodass anschließend die Presskraft entsprechend eingerichtet werden kann. Unter axialem Fließen soll hier nicht eine durch die Querkontraktion der aus der Deformation resultierende Drahtlänge verstanden werden, sondern ein Pressen (Verkleinern) eines Wicklungsvolumens, also eines von der gepressten Drahtwicklung eingenommenen Volumens, auf einen Bauraum der kleiner als ein kumulierter Bauraum der Einzeldrähte (vor dem Pressen) ist.

Beim Pressen des Wickeldrahts in den Lagen kann in Kontakt mit dem Spulenkern und / oder kontaktfrei zum Spulenkern und benachbart hierzu eine erste Stützeinrichtung angeordnet werden, die eingerichtet ist, ein axiales Fließen des Wickeldrahts zu unterbinden. Zum Beispiel kann ein Bauteil der ersten Stützeinrichtung gegenüber einer oder beiden stirnseitigen Öffnungen der Nut angeordnet werden. Soweit doch ein Fließen des Wickeldrahts in axialer Richtung alternativ stattfindet, kann dieses mithilfe der ersten Stützeinrichtung begrenzt werden.

Beim Pressen des Wickeldrahts in den Lagen kann in Kontakt mit dem Spulenkern und / oder kontaktfrei zum Spulenkern und benachbart hierzu eine zweite Stützeinrichtung angeordnet werden, die eingerichtet ist, den Spulenkern abzustützen. Hierbei können zum Beispiel Bauteile der zweiten Stützeinrichtung von radial außen und / oder radial innen an den Spulenkern verlagert werden. Werden Bauteile der zweiten Stützeinrichtung kontaktfrei zum Spulenkern und benachbart hierzu angeordnet, ist beim Pressen wahlweise ein Verlagern von Abschnitten des Spulenkerns gegen das zugeordnete Bauteil der zweiten Stützeinrichtung in engen Grenzen ermöglicht. Die erste und die zweite Stützeinrichtung können mittels einer kombinierten Stützeinrichtung gemeinsam realisiert sein. Mit der einen oder beiden Stützeinrichtungen kann zum Beispiel verhindert werden, dass der Pressvorgang zum Pressen des Wickeldrahts in den Lagen zu einer ungewollten Beschädigung des Spulenkerns führt.

Der Wickeldraht in den Lagen kann in mehreren Nuten synchron gepresst werden. Zum Beispiel können einander gegenüberliegende Presswerkzeug synchron betätigt werden, wodurch auf gegenüberliegenden Seiten eine synchrone Presskraftbeaufschlagung realisiert ist. Es kann eine Anordnung mit mehreren Presswerkzeugen vorgesehen sein, die jeweils einer oder mehreren der Nuten zugeordnet sind, derart, dass mit dem jeweiligen Presswerkzeug der Wickeldraht in den Lagen in den zugeordneten Nuten gepresst wird. In einer Ausführungsform können mehrere Presswerkzeuge auf einer Kreisbahn umlaufend angeordnet sein, um Lagen in Nuten jeweils zu pressen, die ebenfalls entlang einer Kreisbahn umlaufend angeordnet sind. Ein oder mehrere der Presswerkzeuge können synchron betätigt werden, beispielsweise auch alle Presswerkzeuge gleichzeitig. Alternativ kann die Anzahl der Presswerkzeuge geringer sein als die Anzahl der Nuten. In diesem Fall können zu einem Zeitpunkt die Lagen in einer oder mehreren der Nuten gepresst werden, um dann das eine oder die mehreren Presswerkzeuge zu weiteren Nuten zu verlagern, um dort den Wickeldraht in den Lagen zu pressen.

Der Wickeldraht in den Lagen kann in den Nuten mit einem Werkzeugvorsatz gepresst werden, welcher aus einem Werkstoff mit einer Materialhärte ist, die von einer Materialhärte einer Werkzeugbasis verscheiden ist, an der der Werkzeugvorsatz angeordnet ist. In einer Ausführungsform ist die Materialhärte des Werkzeugvorsatzes geringer als die Materialhärte der Werkzeugbasis. Die Werkzeugbasis kann zumindest abschnittsweise innerhalb oder vollständig außerhalb der Nut angeordnet sein. Werkzeugvorsatz und Werkzeugbasis können an dem Presskopf gebildet sein. Falls auf der den zu pressenden Lagen zugewandten Fläche des Presswerkzeugs eine zur radialen Pressrichtung nicht senkrecht stehende Fläche, beispielsweise mit einer Schräge und / oder einer gekrümmten Oberflächenkontur, vorgesehen ist, kann diese Pressfläche des Presswerkzeugs an dem Werkzeugvorsatz angeordnet sein, sofern dieser vorgesehen ist. Andernfalls handelt es sich allgemein um die den zu pressenden Lagen zugewandte Fläche des Presswerkzeugs.

Nach dem Pressen des Wickeldrahts können in den Lagen in den Nuten weiteren Lagen von Wickeidraht in einer oder allen Nuten eingebracht werden. Die weiteren Lagen von Wickeldraht werden eingebracht, nachdem das Presswerkzeug aus der Nut entfernt ist. Es kann der gleiche Wickeldraht wie für die zuvor gepressten Lagen genutzt werden. Alternativ kann ein hiervon verschiedener Wickeldraht zum Einsatz kommen. Mit den weiteren Lagen kann in der Nut eine Nutfüllung hergestellt werden, die sich von der Nutfüllung aus den gepressten Lagen unterscheidet. Die Nutfüllungen sind in radialer Richtung hintereinander angeordnet. Die unterschiedlichen Nutfüllungen können insbesondere verschiedene lokale Füllfaktoren aufweisen. Beispielsweise werden die weiteren Lagen in den Nuten pressfrei eingebracht.

Der Wickeldraht in den Lagen, ausgehend von einer Verteilung gleicher Drahtquerschnittsformen vor dem Pressen, kann durch des Pressens in eine Verteilung verschiedener Drahtquerschnittsformen überführt werden, welche im Wesentlichen nicht runde Querschnittsformen mit abgerundeten Eckbereichen aufweisen. Hierbei kann eine zufällige Verteilung der im Wesentlichen nicht runden Querschnittsformen mit abgerundeten Eckbereichen ausgebildet werden. Die nicht runden Querschnittsformen können sich so insbesondere von im Wesentlichen eckigen Querschnittsformen unterscheiden, beispielsweise einer Hexagon-Form. Die sich ausbildende Verteilung verschiedener Drahtquerschnitte passt sich beim Pressen an die Bedingungen bezüglich der Formgebung innerhalb der Nut an. Der Wickeldraht kann ursprünglich eine runde Querschnittsform aufweisen.

In Verbindung mit der Anordnung für die Spule, die Spule sowie die Vorrichtung zum Herstellen können die vorangehend im Zusammenhang mit dem Verfahren zum Herstellen der Anordnung für eine Spule mit einer verteilten Spulenwicklung einer elektrodynamischen Maschine erläuterten Ausgestaltungen einzeln oder in beliebiger Kombination entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung mit einem Spulenkern mit Nuten im Schnitt und einem Presswerkzeug;
- Fig. 2: eine schematische perspektivische Darstellung eines Presskopfes;
- Fig. 3: eine schematische perspektivische Darstellung eines weiteren Presskopfes;
- Fig. 4: eine schematische Darstellung eines Abschnitts eines Spulenkerns mit Nuten, wobei der Presskopf aus Fig. 2 in einer der Nuten angeordnet ist;
- Fig. 5: eine schematische Darstellung eines Abschnitts eines Spulenkerns mit Nuten, wobei der Presskopf aus Fig. 3 in einer der Nuten angeordnet ist;
- Fig. 6: eine schematische Darstellung eines Abschnitts eines Spulenkerns mit Nuten, wobei in einer Nut Lagen eines Wickeldrahts einer verteilten Spulenwicklung angeordnet sind, die mit einem Presswerkzeug gepresst werden; und
- Fig. 7: eine vergrößerte Darstellung eines Querschnitts eines gepressten Drahtbündels.

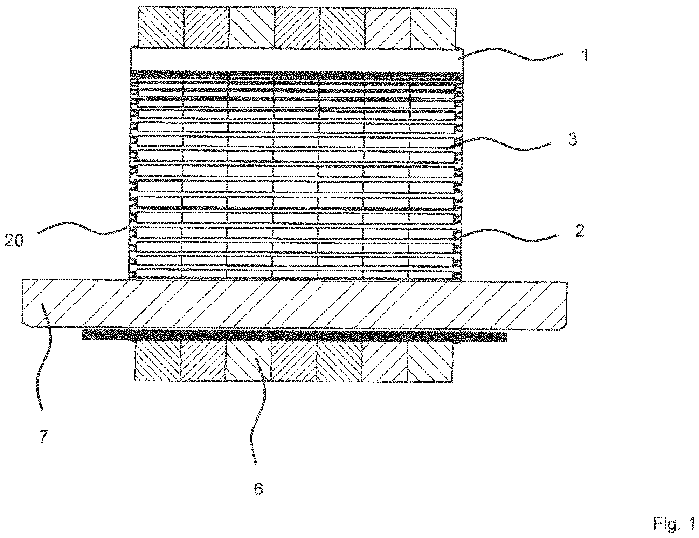

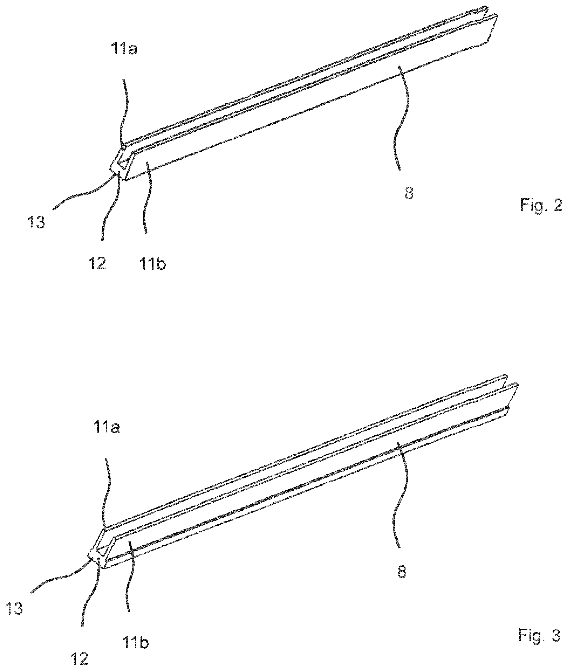

Fig. 1 zeigt eine schematische Darstellung mit einem Spulenkern 1 im Schnitt, der in der gezeigten Ausführungsform eine Rundform aufweist. In axialer Richtung sind sich über die Höhe des Spulenkerns durchgehend erstreckende Nuten 2 vorgesehen, die in Fig. 1 in horizontaler Richtung verlaufen. Beim gezeigten Ausführungsbespiel weisen die Nuten 2 zum Inneren des Spulenkerns 1 hin geöffnete Nutschlitze 3 auf. Gemäß den Fig. 3 bis 6 ist eine Schlitzbreite 4 kleiner als eine Nutbreite 5 der Nuten 2.

Es ist ein mehrstückiges Blechpaket 6 vorgesehen.

Die Darstellung in Fig. 1 zeigt weiterhin ein Presswerkzeug 7, welches innerhalb des Spulenkerns 1 gegenüber den Nuten 2 angeordnet ist. Das Presswerkzeug 7 erfasst die Nuten 2 über ihre gesamte Längserstreckung und ist insoweit eingerichtet, Lagen eines Wickeldrahts in den Nuten 2 in einem Arbeitsgang über die gesamte Länge der Nut 2 zu pressen.

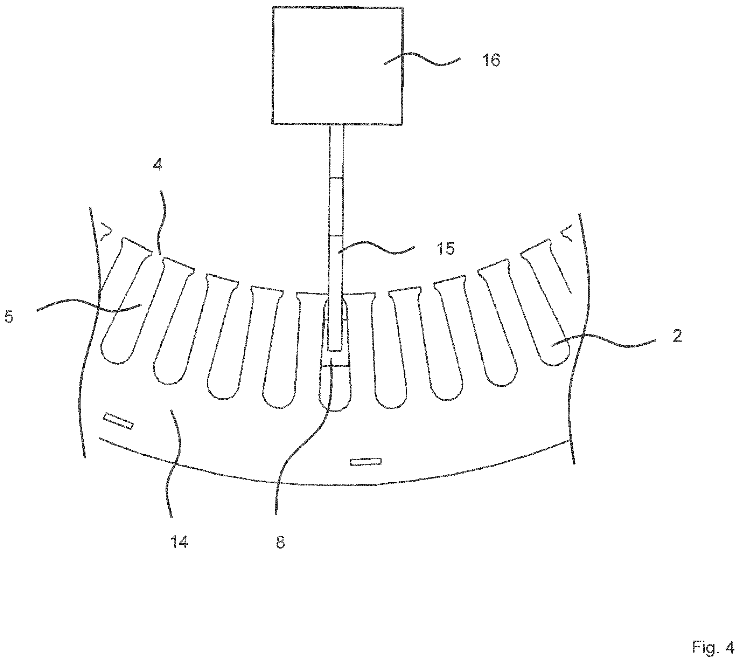

Die Fig. 2 und 3 zeigen perspektivische Darstellungen unterschiedlicher Ausführungsformen eines Presskopfes 8, welcher zusammen mit einem Pressstempel 9 gemäß den Fig. 4 bis 6 als Teil des Presswerkzeugs 7 genutzt wird, um Wickeldraht 10a in Lagen 10b in der Nut 2 zu pressen. Bei den verschiedenen Ausführungsformen des Presskopfes in den Fig. 2 und 3 weist dieser im Querschnitt jeweils eine U-Form auf. Der Presskopf 8 in Fig. 2 ist außen mit einer Konusform versehen (vgl. auch Fig. 4). Bei den Ausführungen des Presskopfs 8 in Fig. 2 und 3 erstrecken sich jeweils parallele Wandabschnitte 11a, 11b hinter einem querstehenden Wandabschnitt 12, an welchem eine Pressfläche 13 vorderseitig gebildet ist.

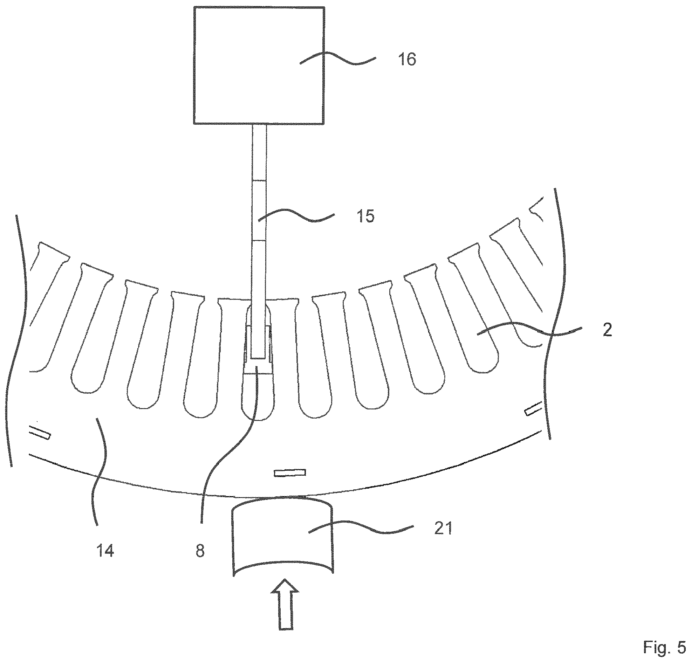

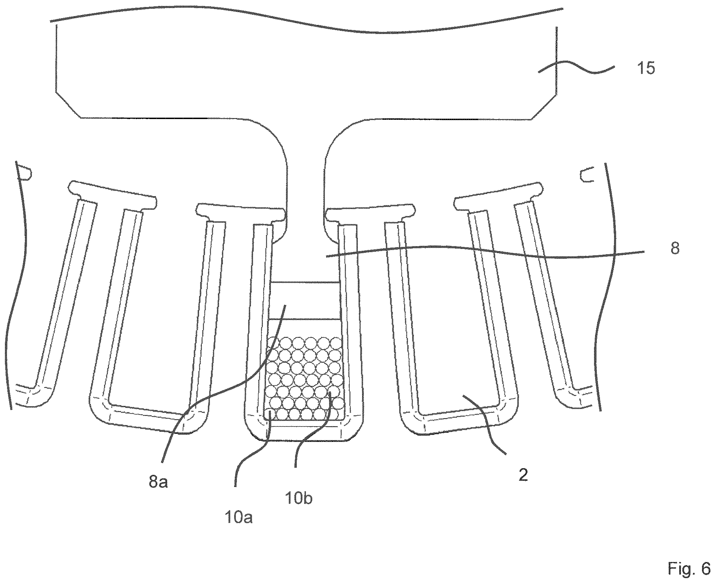

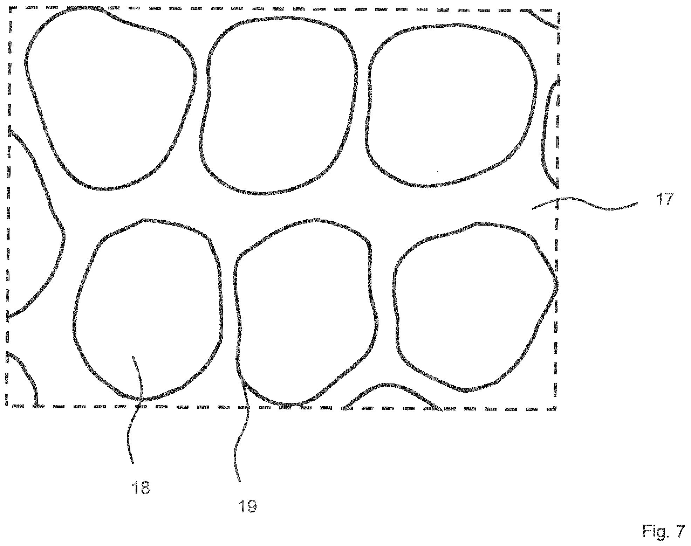

Die Fig. 4 und 5 zeigen jeweils eine schematische Darstellung eines Abschnitts 14 des Spulenkerns 1 mit den Nuten 2, wobei in einer der Nuten 2 der Presskopf 8 angeordnet ist, der innerhalb der Nut 2 an einen Pressstempel 15 koppelt, welcher sich durch den Nutschlitz 3 hindurch nach außen erstreckt und mit einem in den Fig. 4 und 5 schematisch dargestellten Aktor 16 zusammenwirkt, welcher eingerichtet ist, eine Presskraft bereitzustellen, die genutzt wird, um das Presswerkzeug 7 mit Presskopf 8 und Pressstempel 15 in radialer Richtung gemäß Fig. 6 auf die Lagen 10b einer verteilten Wicklung zuzubewegen, um diese zu pressen, wodurch die Drahtquerschnitte des Wickeldrahts 10a individuell und zufällig plastisch verformt werden, wie dies beispielhaft in Fig. 7 für einen Ausschnitt eines Drahtbündels17 gepresster Wickeldrähte 18 mit Isolierung 19 gezeigt ist. Nach der schematischen Darstellung in Fig. 7 weisen die gepressten Wickeldrähte 18 in den Drahtbündeln 17 unregelmäßig ausgebildete Drahtquerschnitte auf, wobei Querschnittsformen mit abgerundeten Eckbereichen ausgebildet sind.

Alternativ erfolgt beim Pressen oder Kompaktieren der Wicklung keine Verformung des Drahtquerschnitts des Wickeldrahts 10a.

Gemäß der beispielhaften Ausführungsform in Fig. 6 erfassen die Lagen 10b die Nutbreite 5 der Nut 2 vollständig. Auch der Presskopf 8, welcher hier einstückig ausgeführt ist, erfasst die zuvor eingebrachten Lagen 10b des Wickeldrahts 10a über die Gesamtbreite der Nut 2. Am Presskopf 8 ist ein Werkzeugvorsatz 8a vorgesehen, der beim Pressen mit den Lagen 10b des Wickeldrahts in Kontakt gebracht wird. Der Werkzeugvorsatz 8a kann aus einem Werkstoff mit einer Materialhärte sein, die von einer Materialhärte des Presskopfes 8 verscheiden ist, zum Beispiel eine geringere Materialhärte aufweisen. Der Presskopf 8 bildet in dem gezeigten Ausführungsbeispiel eine Werkzeugbasis für den Werkzeugvorsatz 8a.

Zum Einbringen in der jeweiligen Nut 2 kann der Presskopf 8 von einer stirnseitigen Öffnung 20 der Nut 2 (vgl. Fig. 1) in axialer Richtung in diese eingeführt werden. Dies kann ausgeführt werden, während der Presskopf 8 am Presstempel 15 angeordnet ist. Alternativ kann vorgesehen sein, den Presskopf 8 getrennt von dem Pressstempel 15 in der Nut 2 in axialer Richtung einzuführen, um dann den Pressstempel 15 in radialer Richtung durch den Nutschlitz 3 hindurch in der Nut 2 einzubringen und an den Presskopf 8 zu koppeln.

Alternativ zu den in den Fig. 4 bis 6 dargestellten Ausführungsformen können mehrere Pressköpfe gleichzeitig in mehreren der Nuten 2 angeordnet und zum Pressen betätigt werden.

Gemäß der Ausgestaltung in Fig. 5 ist außenseitig an dem Spulenkern 1 eine Stützeinrichtung 21 angeordnet, die den Spulenkern 1 beim Pressen abstützt. In vergleichbarer Weise kann eine weitere Stützeinrichtung im Bereich der stirnseitigen Öffnung 20 der Nut 2 angeordnet sein (nicht dargestellt), insbesondere um ein Fließen des Wickeldrahts 10a aus der Nut 2 heraus zu verhindern oder zu begrenzen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Herstellen einer Anordnung für eine Spule mit einer verteilten Spulenwicklung einer elektrodynamischen Maschine, mit
- Bereitstellen eines Spulenkerns (1) mit Nuten (2) und
- Herstellen einer verteilten Spulenwicklung unter Verwendung eines Wickeldrahts (10a) mit Drahtisolierung, wobei hierbei
- in den Nuten (2) Lagen der verteilten Spulenwicklung aus dem Wickeldraht (10a) gebildet werden und
- der Wickeldraht (10a) in den Lagen in den Nuten (2) mit Hilfe eines Presswerkzeugs (7) gepresst wird.

2. Verfahren nach Anspruch 1, **dadurch gekennzeichnet, dass** der Wickeldraht (10a) in den Nuten (2) mittels eines Presskopfes (8) des Presswerkzeugs (7) verpresst wird, welcher zuvor in die Nuten (2) jeweils eingebracht und mit Hilfe eines sich durch einen Nutschlitz (3) der Nut (2) erstreckenden Pressstempels (15) mit Presskraft beaufschlagt wird.

3. Verfahren nach Anspruch 2, **dadurch gekennzeichnet, dass** der Presskopf (8) mittels einer Einführbewegung in axialer Richtung in der Nut (2) eingebracht wird.

4. Verfahren nach Anspruch 2 oder 3, **dadurch gekennzeichnet, dass** als Pressstempel (8) ein Pressstempel verwendet wird, welcher mit Blick in radialer Richtung eine Kopfbreite ausweist, die größer als eine Schlitzbreite (4) des Nutschlitzes (3) ist.

5. Verfahren nach mindestens einem der vorangehenden Ansprüche, **dadurch gekennzeichnet, dass** der Wickeldraht (10a) in den Lagen (10b) im Wesentlichen über die gesamte Nutbreite (5) der Nut (2) flächig gepresst wird.

6. Verfahren nach mindestens einem der vorangehenden Ansprüche, **dadurch gekennzeichnet, dass** die Lagen (10b) in der Nut (2) die Nutbreite (5) im Wesentlichen vollständig erfassend ausgebildet werden.

7. Verfahren nach mindestens einem der vorangehenden Ansprüche, **dadurch gekennzeichnet, dass** der Wickeldraht (10a) in den Lagen (10b) frei von einem axialen Fließen des Wickeldrahts (10a) gepresst wird.

8. Verfahren nach mindestens einem der vorangehenden Ansprüche, **dadurch gekennzeichnet, dass** beim Pressen des Wickeldrahts (10a) in den Lagen (10b) in Kontakt mit dem Spulenkern (1) und / oder kontaktfrei zum Spulenkern (1) und benachbart hierzu eine erste Stützeinrichtung (21) angeordnet wird, die eingerichtet ist, ein axiales Fließen des Wickeldrahts (10a) zu unterbinden.

9. Verfahren nach mindestens einem der vorangehenden Ansprüche, **dadurch gekennzeichnet, dass** beim Pressen des Wickeldrahts (10a) in den Lagen (10b) in Kontakt mit dem Spulenkern (1) und / oder kontaktfrei zum Spulenkern (1) und benachbart hierzu eine zweite Stützeinrichtung angeordnet wird, die eingerichtet ist, den Spulenkern (1) abzustützen.

10. Verfahren nach mindestens einem der vorangehenden Ansprüche, **dadurch gekennzeichnet, dass** in mehreren Nuten (2) der Wickeldraht (10a) in den Lagen (10b) synchron gepresst wird.

11. Verfahren nach mindestens einem der vorangehenden Ansprüche, **dadurch gekennzeichnet, dass** der Wickeldraht (10a) in den Lagen in den Nuten (2) mit einem Werkzeugvorsatz (8a) gepresst wird, welcher aus einem Werkstoff mit einer Materialhärte ist, die von einer Materialhärte einer Werkzeugbasis verschieden ist, an der der Werkzeugvorsatz (8a) angeordnet ist.

12. Verfahren nach mindestens einem der vorangehenden Ansprüche, **dadurch gekennzeichnet, dass** nach dem Pressen des Wickeldraht (10a) s in den Lagen in den Nuten (2) weiteren Lagen von Wickeldraht (10a) in einer oder allen Nuten (2) eingebracht werden.

13. Verfahren nach mindestens einem der vorangehenden Ansprüche, **dadurch gekennzeichnet, dass** der Wickeldraht (10a) in den Lagen (10b), ausgehend von einer Verteilung gleicher Drahtquerschnitte vor dem Pressen, durch des Pressens in eine Verteilung verschiedener Drahtquerschnitte überführt wird, welche im Wesentlichen nicht runde Querschnittsformen mit abgerundeten Eckbereichen aufweisen.

14. Anordnung für eine Spule mit einer verteilten Spulenwicklung einer elektrodynamischen Maschine, mit einem Spulenkern (1) mit Nuten (2) und einer verteilten Spulenwicklung aus einem Wickeldraht (10a) mit Drahtisolierung, wobei die verteilte Spulenwicklung in den Nuten (2) gepresste Lagen des Wickeldrahts (10a) aufweist.

15. Spule für eine elektrodynamische Maschine, mit einer Anordnung nach Anspruch 14.

16. Vorrichtung zum Herstellen einer Anordnung für eine Spule mit einer verteilten Spulenwicklung einer elektrodynamischen Maschine, mit
- einer Werkstückaufnahme, die eingerichtet ist, einen Spulenkern (1) mit Nuten (2) aufzunehmen;
- einer Wickeleinrichtung, die eingerichtet ist, in den Nuten (2) Lagen (10b) einer verteilten Spulenwicklung aus dem Wickeldraht (10a) herzustellen; und
- einer Presseinrichtung (7, 16), die eingerichtet ist, den Wickeldraht (10a) in den Lagen (10b) in den Nuten (2) mit Hilfe eines Presswerkzeugs (7) zu pressen.
